# EUROPEAN PATENT APPLICATION

(11) **EP 1 087 636 A2**
(43) Date of publication of application: **28.03.2001**
(21) Application number: 00402541.7
(22) Date of filing: 14.09.2000
(51) Int. Cl.: H04Q 11/04

(54) **Method and system for allocating channels in an access system**

(30) Priority: 23.09.1999 ES 9902115
(71) Applicant: ALCATEL, 75008 Paris (FR)
(72) Inventor: Gonzalez de Prado Diaz, José Luis, 28043 Madrid (ES)
(74) Representative: Lamoureux, Bernard

(57) **Abstract**

Method for allocating channels in a radio access system, which comprises an access node (11-j) connected to a remote unit (12-i), the latter being connected to a group of subscribers to an integrated services digital network (ISDN).

The access node (11-j) communicates with a local switching exchange (LE) by means of a V5.2 communications protocol, such that the allocation of a bearer channel of a digital link is governed by the local switching exchange.

As a consequence, it is possible to use some bit within some of the messages interchanged between the access node (11-j) and the local switching exchange (LE) to provide the access node (11-j) with the result of the analysis of the signalling of an ISDN call over the network link, said analysis being performed by the local switching exchange (LE).

This method is particularly useful for radio access systems in which voice encoding processes are carried out, such as ADPCM at 8 kbps, at 12 kbps or others.

## Description

### OBJECT OF THE INVENTION

The present invention relates to a method and system for carrying out the allocation of at least one channel, which belongs to an access system, to a connection it is intended to set up between a subscriber to an integrated services digital network (ISDN) and a local switching exchange.

To achieve this, it is intended that the access node use the results of the analysis performed by the local exchange of the signalling corresponding to an incoming call, to implement the allocation of at least one channel to said connection.

The method of the present invention is of special, but not exclusive, application in radio access systems that carry out voice encoding processes such as ADPCM, an example being a digital enhanced cordless telecommunication (DECT) system.

### STATE OF THE ART

The subscribers to a transport network, such as a public switched telephone network PSTN, often obtain access thereto by means of an access system such as a radiocommunication system, which has a set of fixed units that communicate by radio with a plurality of remote units, fixed and/or mobile.

On the network side, the fixed units are connected to local switching exchanges by cable and in the interconnection use is made of a communications protocol, such as the V5 communications protocol and derivatives thereof (V5.1, V5.2).

On the subscriber side, the communications devices located in the subscriber premises, such as telephones, fax machines, data terminals, among others, are connected by cable, or by radio access, or by a mix of the two to the remote units.

The radiocommunication system has a tree structure, in which the fixed unit is connected by radio with the remote units that are inside its coverage area, since the fixed unit has an associated coverage area.

By means of the telephone network PSTN, a subscriber can obtain access to other transport networks, such as an integrated services digital network ISDN, which offers end-to-end digital connectivity to its users making possible the interchange of any type of information, independently of its nature (voice, data, images, video, etc.). To this end, the information that the user transmits and receives is digitised, so that the user has the possibility of obtaining multiple telecommunication services over a single access line.

An analogue signal from a user is converted into digital form by means of an encoding process, such as ADPCM or others, said conversion normally being done in the remote unit to which said user is connected. Once the fixed unit receives the ADPCM digital signal, it performs a transcoding process at the conclusion of which a PCM information signal is obtained that is forwarded to the transport network through the local exchange.

In the case where the user is employing an integrated services digital network ISDN, the interconnection process between the local exchange and the fixed unit is implemented by means of the ETS V5.2 protocol (ETS 300 347-1) over 2084 kbps links, this protocol being incorporated in the present patent application by reference.

As defined by protocol V5.2, the local exchange instructs the fixed unit in the channel allocation process within the V5.2 interface through analysis of the incoming call signalling thereto, and as a consequence of performing a full analysis of network layer 3 (subscriber-network signalling) corresponding to ITU-T Recommendation Q.931 (access protocol) of the ISDN protocol, in order to implement a process to discriminate between a voice call and a data call, over an ISDN B channel.

Likewise, in a parallel manner, the fixed unit performs the functions associated with network layer 3 of the ITU-T Q.931 protocol for discriminating the nature of the call over B channels and being able to carry out the allocation of radio channels; as well as applying, for the case of voice, voice compression, echo cancelling, among other processes; and, for the case of data, suppressing both processes as they would distort the data. The data are transmitted in transparent mode (64 kbps).

The Q.931 protocol is of considerable complexity due to the requirements it must satisfy. As a result, the processing of said protocol increases the computing load, complicates control and increases the cost of the radio access system.

It has therefore become necessary to develop a method that permits mitigation of control complexity and computing load, and reduction of the access system cost. For these reasons the marketplace, the operators and the users, among others, are urging the implanting of these systems for access via radio.

### CHARACTERISATION OF THE INVENTION

An object of the present invention is to provide a method for allocating at least one channel of an access system to a call that carries voice or data, as a function of the results of the analysis of the incoming call signalling to a local switching exchange, said analysis being performed by the latter in order to discriminate whether the call carries voice or data, attaining optimisation in the allocation process implemented in the access system.

A further object of the channel allocation method is to free an access node of the access system from the task of analysing network layer 3 of the Q.931 protocol of an integrated services digital network, thereby achieving simplification in the operation of the access node.

The method of the present invention proposes the use of the analysis performed by the local switching exchange for discriminating whether a call made by a subscriber to an integrated services digital network, over a B channel, carries voice or data.

Given that the access node is connected to the local switching exchange via a digital link, and that the interconnection is managed from the local switching exchange according to the V5.2 communications protocol, it is possible to employ some bit within any of the messages exchanged between the access node and the local switching exchange for delivering the result of the analysis of the network link of the signalling of a call made over a B channel.

This method is especially useful in radio access systems, in which voice encoding processes such as ADPCM at 8kbps, at 12kbps, or others, are carried out.

### BRIEF DESCRIPTION OF THE FIGURES OF THE INVENTION

A more detailed explanation of the invention is given in the following description based on the figures attached, in which:

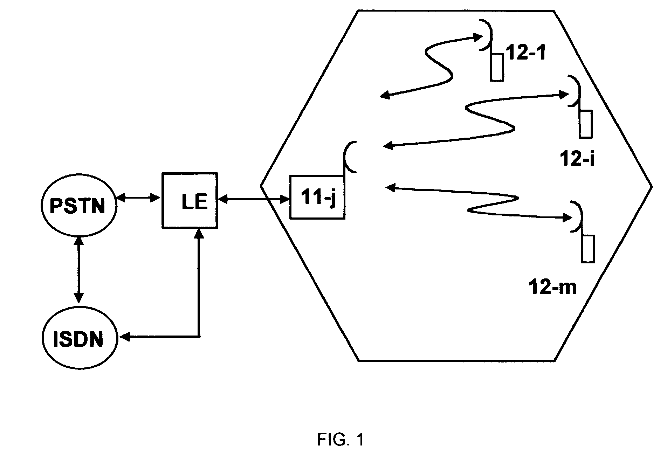

- figure 1 shows a block diagram of a radio access system that connects a local switching exchange to some subscribers to a transport network according to the invention.

### DESCRIPTION OF THE INVENTION

Figure 1 shows an access system that comprises a set of access nodes 11-1 to 11-n and a set of remote units 12-1 to 12-m to which are connected the subscribers to a transport network such as a public switched telephone network PSTN and an integrated services digital network ISDN, among others.

The access node 11-j (where j = 1, ..., n) and a local switching exchange LE use the ETS V5.2 protocol (ETS 300 347-1) for the purpose of communicating with each other, and are connected at least by one link at 2048 kbit/s, which has 32 communications channels, of which at least one is dedicated to control messages.

In a first embodiment of the present invention a description is given in relation with a radio access system, such as the digital enhanced cordless telecommunication DECT system, in which processes of encoding voice to ADPCM digital signals are implemented.

In the case in which the user is a subscriber to an integrated services digital network ISDN, the subscriber has at least one terminal equipment connected to the remote unit 12-i by means of cable, for example, and sends his information over type B or D channels, which employ a different link level that permits the transfer of information.

When the subscriber makes a call, the local exchange LE proceeds to the full analysis of the network layer 3 (subscriber-network signalling) of the ISDN Q.931 protocol. In this manner, it discriminates whether the B channels of the integrated services digital network ISDN carry data or voice. A similar procedure is followed when the call comes from the network, then the local exchange LE performs the function of discriminating the type of call through the analysis of the call signalling coming from the network, such as SS7 (signalling system number 7).

Once the local exchange LE knows what type of information is coming from the subscriber, the exchange requests the access node 11-j to set up and release at least one connection between a specific ISDN port of the access node 11-j and a channel of the V5.2 interface, by means of the BCC (bearer channel connection) protocol within the V5.2 protocol.

To this end, the local exchange LE transmits an allocation message corresponding to the BCC protocol, so that the allocation of the bearer channel shall set up the connection between the respective ISDN ports of the exchange LE and of the access node 11-j.

Thus, the transactions or negotiations between the local exchange LE and the access node 11-j for performing the allocation of a number of bearer channels, on the V5.2 interface, to a specific ISDN port, are defined by the BCC protocol.

Given that the local exchange LE carries out a full analysis of network layer 3 of the Q.931 protocol to determine the type of ISDN service that is being asked for through the incoming call, it is possible to send this information to the access node 11-j, so that it is possible for it to allocate an optimum number of channels, pertaining to the access system, to the call that the subscriber is making.

Thus, it is possible to employ a predetermined bit, which has no initially assigned function, for the object of carrying information to the access node 11-j relative to the ISDN service required by the subscriber.

The predetermined bit is inside one of the messages of the V5.2 communications protocol for indicating the corresponding information.

For example, it is possible to use a message of the BCC protocol termed V5 TIME SLOT IDENTIFICATION information element that is used to identify a unique V5 channel within a particular 2084 kbit/s link, because the V5 TIME SLOT IDENTIFICATION information element has at least two bits unused and always at 0, which belong to the fourth octet and occupy the positions 8 and 7 within octet 4. As a consequence, it is possible to assign a function to the bit that occupies the position 8, for example.

A processor attends to the value of the bit 8, termed hereafter the discriminator bit, as a function of the result of the analysis carried out by the local exchange LE. Thus, if the call has been encoded by the local exchange LE as a data call, the processor assigns a value other than 0 to the discriminator bit, which shall be included in the V5 TIME SLOT IDENTIFICATION information element.

The V5 TIME SLOT IDENTIFICATION information element is a message employed during the negotiation undertaken between the local exchange LE and the access node 11-j for assigning a bearer channel within a 2084 kbit/s link, on the V5.2 interface.

Once the access node 11-j receives the V5 TIME SLOT IDENTIFICATION information element, it is possible to make an optimum allocation of at least one radio channel of the DECT system, required for implementing the transport of the call information. To this end, the access node 11-j has detector means with which it detects the value of the discriminator bit.

Consequently, the processor is programmed with an algorithm for setting a value other than 0 to the discriminator bit, included within the V5 TIME SLOT IDENTIFICATION information element, in the event that the B channel of the ISDN network is carrying data. With this it is managed to reduce the complexity and computing load of the access node 11-j, without increasing excessively the computing load and complexity of the local exchange LE.

The aforementioned is because the access node 11-j does not perform the analysis of network layer 3 of the Q.931 protocol for the purpose of determining the number of channels that the call requires.

In this manner, the access node 11-j depends wholly on the local exchange LE for carrying out the function of optimum allocation of at least one channel of the access system to a call in the set-up process.

## Claims

1. **Method for allocating channels in an access system** that comprises at least one access node (11-j) connected to a local switching exchange (LE) by means of at least one digital link and a remote unit (12-i) connected to a group of subscribers to an integrated services digital network ISDN, so that the allocation of a channel of said digital link is governed by said local switching exchange (LE); **characterised** in that at least one channel of said access system is allocated to a call, which carries data or voice, on the basis of the result of the network layer analysis of said call.

2. **Method for allocating channels** according to claim 1, **characterised** in that the value of a predetermined bit is changed as a function of the result of the network layer analysis of said call.

3. **Method for allocating channels** according to claim 2, **characterised** in that said predetermined bit takes on a value other than 0 when said call carries data.

4. **Method for allocating channels** according to claim 2, **characterised** in that said predetermined bit takes on a value equal to 0 when said call carries data.

5. **Method for allocating channels** according to either claim 3 or 4, **characterised** in that said predetermined bit is sent during the channel allocation process of said digital link to said call.

6. **Method for allocating channels** according to claim 5, **characterised** in that said predetermined bit belongs to a message of a V5.2 communications protocol.

7. **Method for allocating channels** according to claim 1, **characterised** in that said network layer is relative to a Q.931 communications protocol of said integrated services digital network ISDN.

8. **System for allocating channels in an access system** that comprises at least one access node (11-j) connected to a local switching exchange (LE) by means of at least one digital link and a remote unit (12-i) connected to a group of subscribers to an integrated services digital network ISDN, so that the allocation of a channel of said digital link is governed by said local switching exchange (LE); **characterised** in that said access system is adapted for allocating at least one of its channels to a call, which carries data or voice, on the basis of the result of the network layer analysis of said call performed by said local switching exchange (LE).

9. **System for selecting a channel** according to claim 8, **characterised** in that processor means are adapted for changing the value of said predetermined bit as a function of the result of the network layer analysis of said call performed by said local switching exchange (LE).

10. **System for selecting a channel** according to claim 9, **characterised** in that said processor means are added to said local switching exchange (LE).

11. **System for selecting a channel** according to claim 8, **characterised** in that detector means are adapted for detecting the value of said predetermined bit.

12. **System for selecting a channel** according to claim 11, **characterised** in that said detector means are included in said access node (11-j).

13. **System for selecting a channel** according to claim 8, **characterised** in that said access system is applied to a radio access system.

14. **System for selecting a channel** according to claim 8, **characterised** in that said local switching exchange (LE) is adapted for communicating by means of a V5.2 communications protocol with said access node (11-j).
